# EUROPEAN PATENT APPLICATION

(11) **EP 4 598 134 A1**
(43) Date of publication of application: **06.08.2025**
(21) Application number: 23930037.9
(22) Date of filing: 05.12.2023
(51) Int. Cl.: H04W 40/22

(54) **SIDELINK RELAY RESELECTION METHOD, COMMUNICATION APPARATUS, AND STORAGE MEDIUM**

(30) Priority: 30.03.2023 CN 202310376221
(71) Applicant: ZTE Corporation, Shenzhen, Guangdong 518057 (CN)
(72) Inventor: XU, Hui, Shenzhen, Guangdong 518057 (CN); HUA, Xiaoquan, Shenzhen, Guangdong 518057 (CN); JI, Zhongwei, Shenzhen, Guangdong 518057 (CN); DING, Jianfeng, Shenzhen, Guangdong 518057 (CN)
(74) Representative: Ziebig Hengelhaupt Intellectual Property Attorneys Patentanwaltskanzlei PartGmbB
(86) International application number: PCT/CN2023/136438
(87) International publication number: WO 2024/198471

(57) **Abstract**

Provided are a sidelink relay reselection method, a communication apparatus, and a storage medium. The method comprises: when a first node performs sidelink communication with a second node by means of a first relay device, the first node obtaining an identifier of at least one candidate relay device by means of a relay discovery process; when a reselection condition is met, sending a reselection request message to the second node, wherein the reselection request message is used for requesting to reselect a relay device, and the reselection request message comprises the identifier of at least one candidate relay device; receiving a reselection response message sent by the second node, wherein the reselection response message comprises an identifier of a second relay device, and the second relay device is one of the at least one candidate relay device; and establishing an end-to-end sidelink connection with the second node by means of the second relay device.

## Description

The present disclosure claims a priority of Chinese Patent Application No. 202310376221.8, filed on March 30, 2023, the entire contents of which are incorporated into this application by reference.

### TECHNICAL FIELD

The present disclosure relates to the technical field of wireless communication networks, and in particular, to a sidelink relay reselection method, a communication apparatus, and a storage medium.

### BACKGROUND

In a research topic for a user equipment (UE) and UE direct relay (UE-to-UE relay), a source UE and a target UE establish a direct sidelink with a relay device (i.e., a UE-to-UE relay, or a U2U relay), respectively, to achieve a sidelink connection.

### SUMMARY

In an aspect, embodiments of the present disclosure provide a sidelink relay reselection method, applied to a first node. The first node performs sidelink communication with a second node through a first relay device. The method includes:
obtaining an identifier of at least one candidate relay device through a relay discovery process;
sending a reselection request message to the second node in a case where a reselection condition is satisfied, where the reselection request message is used to request to reselect a relay device and the reselection request message includes the identifier of the at least one candidate relay device;
receiving a reselection response message sent from the second node, where the reselection response message includes an identifier of a second relay device and the second relay device is one of the at least one candidate relay device; and
establishing an end-to-end sidelink connection with the second node through the second relay device.

In another aspect, the embodiments of the present disclosure provide a sidelink relay reselection method, applied to a second node. The second node performs sidelink communication with a first node through a first relay device. The method includes:
receiving a reselection request message sent from the first node in a case where a reselection condition is satisfied, where the reselection request message is used to request to reselect a relay device and the reselection request message includes an identifier of at least one candidate relay device;
sending a reselection response message to the first node, where the reselection response message includes an identifier of a second relay device and the second relay device is one of the at least one candidate relay device; and
establishing an end-to-end sidelink connection with the first node through the second relay device.

In yet another aspect, the embodiments of the present disclosure provide a reselection apparatus, applied to a first node. The first node performs sidelink communication with a second node through a first relay device. The reselection apparatus includes: an acquisition module, a communication module and a connection module. The acquisition module is configured to obtain an identifier of at least one candidate relay device through a relay discovery process. The communication module is configured to send a reselection request message to the second node in a case where a reselection condition is satisfied, where the reselection request message is used to request to reselect a relay device and the reselection request message includes the identifier of the at least one candidate relay device. The communication module is further configured to receive a reselection response message sent from the second node, where the reselection response message includes an identifier of a second relay device and the second relay device is one of the at least one candidate relay device. The connection module is configured to establish an end-to-end sidelink connection with the second node through the second relay device.

In yet another aspect, the embodiments of the present disclosure provide a reselection apparatus, applied to a second node. The second node performs sidelink communication with a first node through a first relay device. The reselection apparatus includes: a communication module and a connection module. The communication module is configured to receive a reselection request message sent from the first node in a case where a reselection condition is satisfied, where the reselection request message is used to request to reselect a relay device and the reselection request message includes an identifier of at least one candidate relay device, and the communication module is further configured to send a reselection response message to the first node, where the reselection response message includes an identifier of a second relay device and the second relay device is one of the at least one candidate relay device. The connection module is configured to establish an end-to-end sidelink connection with the first node through the second relay device.

In yet another aspect, the embodiments of the present disclosure provide a communication node. The communication node includes: a memory and a processor. The memory is coupled with the processor; the memory is configured to store a computer program; and the processor, upon executing the computer program, implements the sidelink relay reselection method in any aspect mentioned above.

In yet another aspect, the embodiments of the present disclosure provide a computer-readable storage medium. The computer-readable storage medium has computer program instructions stored thereon, and the computer program instructions, upon being executed by a processor, implement the sidelink relay reselection method in any aspect mentioned above.

In yet another aspect, the embodiments of the present disclosure provide a computer program product. The computer program product includes computer program instructions, and the computer program instructions, upon being executed by a processor, implement the sidelink relay reselection method in any aspect mentioned above.

### BRIEF DESCRIPTION OF THE DRAWINGS

In order to explain the technical solutions in the present disclosure more clearly, the accompanying drawings to be used in some embodiments of the present disclosure will be introduced briefly below. Obviously, the accompanying drawings to be described below are merely drawings of some embodiments of the present disclosure, and for a person of ordinary in the art, other drawings may also be obtained according to these accompanying drawings.
FIG. 1 is a schematic diagram of a scenario of a UE-to-UE relay according to some embodiments.
FIG. 2 is a schematic diagram of a structure of a node according to some embodiments.
FIG. 3 is a schematic diagram of a structure of a relay device according to some embodiments.
FIG. 4 is a schematic diagram of a protocol stack architecture according to some embodiments.
FIG. 5 is a schematic diagram of another protocol stack architecture according to some embodiments.
FIG. 6 is a flowchart of a sidelink relay reselection method according to some embodiments.
FIG. 7 is a flowchart of another sidelink relay reselection method according to some embodiments.
FIG. 8 is a flowchart of a communication method according to some embodiments.
FIG. 9 is a flowchart of yet another sidelink relay reselection method according to some embodiments.
FIG. 10 is a flowchart of yet another sidelink relay reselection method according to some embodiments.
FIG. 11 is a flowchart of yet another sidelink relay reselection method according to some embodiments.
FIG. 12 is a flowchart of yet another sidelink relay reselection method according to some embodiments.
FIG. 13 is a flowchart of yet another sidelink relay reselection method according to some embodiments.
FIG. 14 is a schematic diagram of a structure of a reselection apparatus according to some embodiments.
FIG. 15 is a schematic diagram of a structure of a reselection apparatus according to some embodiments.
FIG. 16 is a schematic diagram of a structure of yet another reselection apparatus according to some embodiments.

### DETAILED DESCRIPTION

In order to make a person skilled in the art to better understand the technical solutions of the embodiments of the present disclosure, the technical solutions in the present disclosure will be described below clearly and completely in conjunction with the accompanying drawings. Obviously, the described embodiments are merely some but not all of the embodiments of the present disclosure. All other embodiments obtained based on the embodiments of the present disclosure by a person of ordinary in the art without any creative effort shall belong to the protection scope of the present disclosure.

It should be noted that in the present disclosure, expressions, such as "exemplarily" or "for example", etc., are used to express examples, instances, or illustrations. Any embodiments or design solutions described by "exemplarily" or "for example" in the present disclosure should not be interpreted as being more preferred or advantageous than other embodiments or design solutions. Rather, the usage of expressions, such as "exemplarily" or "for example", etc., is intended to present relevant concepts in a detailed manner.

Hereinafter, the terms, "first", "second", etc., are used for descriptive purposes only and are not to be construed as indicating or implying relative importance or implicitly indicating the number of indicated technical features. Thus, features defined with "first" or "second", etc., may explicitly or implicitly include one or more of the features.

In the description of the present disclosure, unless otherwise stated, the symbol "/" means "or", for example, "A/B" may mean A or B. Herein, "and/or" is merely to describe an association relationship between associated objects, which represents that there may be three kinds of relationships. For example, A and/or B may mean: only A, only B, and A and B. In addition, "at least one" means one or more, and "a/the plurality of" means two or more than two.

With the development of wireless multimedia services, there is an increasing demand for a data rate and user experience from people, which puts forward higher requirements on the system capacity and coverage of a traditional cellular network. In addition, in application scenarios such as public safety, social networks, short-range data sharing, and local advertising, there is an increasing demand for people to understand and communicate with people or things nearby (i.e., proximity services, ProSe). The traditional cellular network centered on a base station has an obvious limitation in terms of supporting a high data rate and proximity services, and under this demand background, a device-to-device (D2D) technology representing a new direction of future communication technology development has emerged. The application of D2D technology can reduce the burden on a cellular network, reduce battery power consumption of a user equipment, increase a data rate, and improve robustness of network infrastructures, thereby meeting the requirements of the data rate services and proximity services mentioned above. Currently, D2D technology is also referred to as ProSe, sidelink (SL).

D2D technology generally includes D2D discovery technology and D2D communication technology. D2D discovery technology refers to a technology used to judge or determine whether there are other user equipments in proximity to a user equipment. Generally, D2D user equipments may discover each other by sending or receiving discovery information therebetween. D2D communication technology refers to a technology that part or all communication data between D2D user equipments may be communicated directly without passing through the network infrastructure.

3GPP approved the research project "NR side relay Study" in Rel-17 to cover the enhancements and solutions required to support a relay between a user equipment (UE) and a network and a UE-to-UE relay coverage extension, considering a wider range of applicability (including vehicle to everything (V2X), public safety, and commercial applications and services). To further study 5G system enhancements to better support use cases that require the side relay, it is critical to support the U2U relay to achieve side coverage extension without relying on an uplink and a downlink.

In the research topic of a UE-to-UE relay in some technologies, a source UE and a target UE establish a direct sidelink with a relay device (i.e., a UE-to-UE relay), respectively, to achieve a sidelink connection.

In some technologies, there is still no solution for whether the UE-to-UE relay can be reselected, how to reselect the UE-to-UE relay and a triggering condition for reselecting the UE-to-UE relay.

To solve the technical problems mentioned above, the embodiments of the present disclosure provide a sidelink relay reselection method, and the principle of the method is that: in a case where a first node performs sidelink communication with a second node through a first relay device, the first node may discover at least one candidate relay device through a discovery process, and then, in a case where a reselection condition is satisfied, send a reselection request message to the second node (the reselection request message may include an identifier of the at least one candidate relay device), so as to request to reselect a relay device. Accordingly, in a case where the second node receives the reselection request message, the second node may select a second relay device from the at least one candidate relay device and send a reselection response message to the first node (the reselection response message includes an identifier of the second relay device), and then an end-to-end sidelink connection may be established between the first node and the second node through the second relay device. It can be seen that the method provided in the embodiments of the present disclosure stipulates that in a case where the reselection condition is satisfied, a new relay device may be reselected and an end-to-end sidelink connection may be established based on the new relay device. In this way, a quality of a sidelink and efficiency of data transmission based on the sidelink can be enhanced.

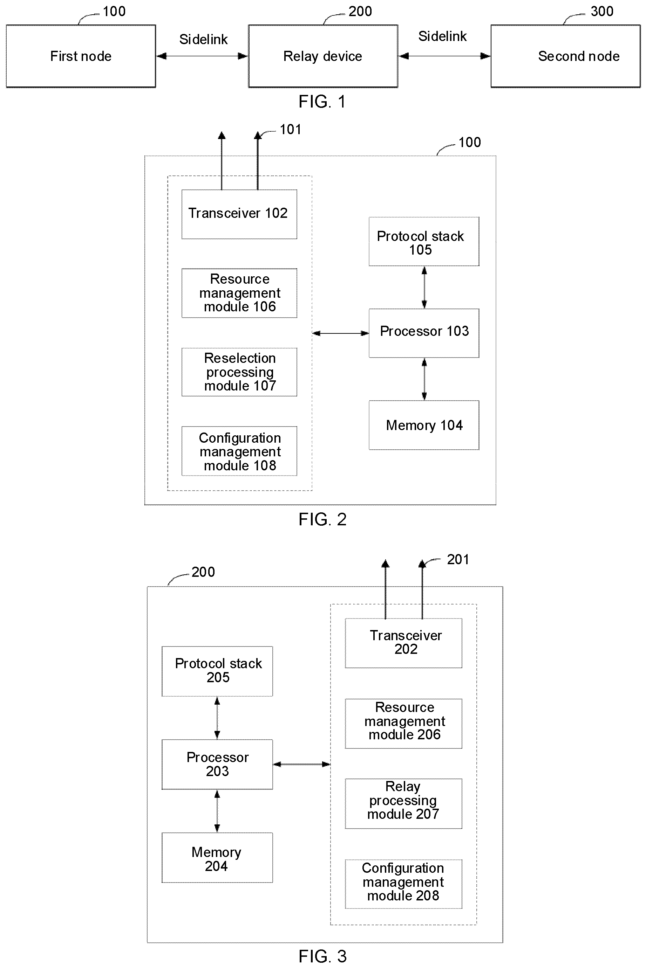

FIG. 1 is a schematic diagram of a scenario of a UE-to-UE relay according to some embodiments. As shown in FIG. 1, the scenario includes: a first node 100, a relay device 200, and a second node 300. The first node 100 is connected to the relay device 200 through a sidelink; and the relay device 200 is connected to the second node 300 through a sidelink.

FIG. 2 is a schematic diagram of a structure of the first node 100. As shown in FIG. 2, the first node 100 includes: an antenna 101, a transceiver 102, a processor 103, a memory 104, a protocol stack 105, a resource management module 106, a reselection processing module 107, and a configuration management module 108.

The antenna 101 includes a receiving antenna and a transmitting antenna, and is configured to send and receive a radio frequency (RF) signal.

The transceiver 102 is coupled to the antenna 101; and is configured to receive the RF signal from the antenna 101, convert the RF signal into a baseband signal, and then send the baseband signal to the processor 103. The transceiver 102 is further configured to convert a baseband signal received from the processor 103 into an RF signal and send the RF signal to the antenna 101.

The processor 103 is configured to process a received baseband signal and call different functional modules to execute functional features in the first node 100.

The memory 104 is configured to store program instructions and data.

The protocol stack 105 refers to a software implementation of a computer network protocol architecture.

The resource management module 106 is configured to allocate and select a sidelink resource for the first node 100.

The reselection processing module 107 is configured to execute an operation of reselecting a relay device in a case where a reselection condition is satisfied.

The configuration management module 108 is configured to provide control and configuration information related to a reselection operation.

In some embodiments, the different functional modules mentioned above may be implemented and configured by software, firmware, hardware or any combination thereof. When the processor 103 executes the functional modules (e.g., executes the program instructions stored in the memory 104), respective functional modules allow the first node 200 to correspondingly perform any one of the sidelink relay reselection methods provided in the embodiments of the present disclosure.

In some embodiments, the structure of the second node 300 may be referred to the first node 100 mentioned above, and will not be repeated herein.

FIG. 3 is a schematic diagram of a structure of the relay device 200 according to some embodiments. As shown in FIG. 3, the relay device 200 includes: an antenna 201, a transceiver 202, a processor 203, a memory 204, a protocol stack 205, a resource management module 206, a relay processing module 207, and a configuration management module 208.

The antenna 201 includes a receiving antenna and a transmitting antenna, and is configured to send and receive an RF signal.

The transceiver 202 is coupled to the antenna 201; and is configured to receive the RF signal from the antenna 201, convert the RF signal into a baseband signal, and then send the baseband signal to the processor 203. The transceiver 202 is further configured to convert a baseband signal received from the processor 203 into an RF signal and send the RF signal to the antenna 201.

The processor 203 is configured to process a received baseband signal and call different functional modules to execute functional features in the relay device 300.

The memory 204 is configured to store program instructions and data.

The protocol stack 205 refers to a software implementation of a computer network protocol architecture.

The resource management module 206 is configured to allocate and select a sidelink resource for the relay device 200.

The relay processing module 207 is configured to send a relay control signaling and/or data for the first node 100 or the second node 300.

The configuration management module 208 is configured to provide control and configuration information related to a reselection operation.

In some embodiments, the different functional modules mentioned above may be implemented and configured by software, firmware, hardware or any combination thereof. When the processor 203 executes the functional modules (e.g., executes the program instructions stored in the memory 204), respective functional modules allow the relay device 200 to correspondingly execute any one of the sidelink relay reselection methods provided in the embodiments of the present disclosure.

Exemplarily, the first node 100 mentioned above may send a reselection request message to the relay device 200 through the transceiver 102, so as to trigger the relay device 200 to perform a reselection operation. After a new relay device 200 has been selected, the first node 100 may establish an end-to-end sidelink connection with the second node through the new relay device 200. Based on an established end-to-end sidelink connection, an end-to-end sidelink security connection may be established between the first node 100 and the second node 200.

In some embodiments, the number of the first node 100 mentioned above may be one or more; and the number of the second node 300 may also be one or more. In a case where there are a plurality of first nodes 100 and a plurality of second nodes 300 mentioned above, an end-to-end sidelink connection is established between each first node 100 and each second node 300.

There may be one or more sidelink services on the first node 100 or the second node 300 mentioned above. Multiple sidelink services on a node (e.g., the first node or the second node) may be transmitted on a sidelink by adopting a multiplexing manner; or, a plurality of nodes (e.g., the first node or the second node) may perform transmission on a sidelink in a multiplexing manner through a same relay device. Exemplarily, the multiplexing manner mentioned above includes time division multiplexing, frequency division multiplexing, space division multiplexing, wavelength division multiplexing or code division multiplexing.

Exemplarily, in a case where the first node 100 communicates with multiple second nodes 300, the multiple second nodes 300 may share the sidelink between the first node 100 and the relay device 200, and the relay device 200 establishes multiple sidelinks with the multiple second nodes 300, respectively. A link is formed between a second node 300 and the relay device 200.

In a case where multiple first nodes 100 communicate with one second node 200, the multiple first nodes 100 may share the sidelink between the second node and the relay device 200, and the relay device 200 establishes multiple sidelinks with the multiple first nodes 100, respectively. A link is formed between a first node 100 and the relay device 200.

In some embodiments, the first node 100 may serve as a source node (or referred to as a source UE) or a target node (or referred to as a target UE); and the second node 300 may also serve as a source node (or referred to as a source UE) or a target node (or referred to as a target UE). Exemplarily, in a case where the first node 100 is a source node, the second node 300 is a target node; and in a case where the second node 300 is a source node, the first node 100 is a target node.

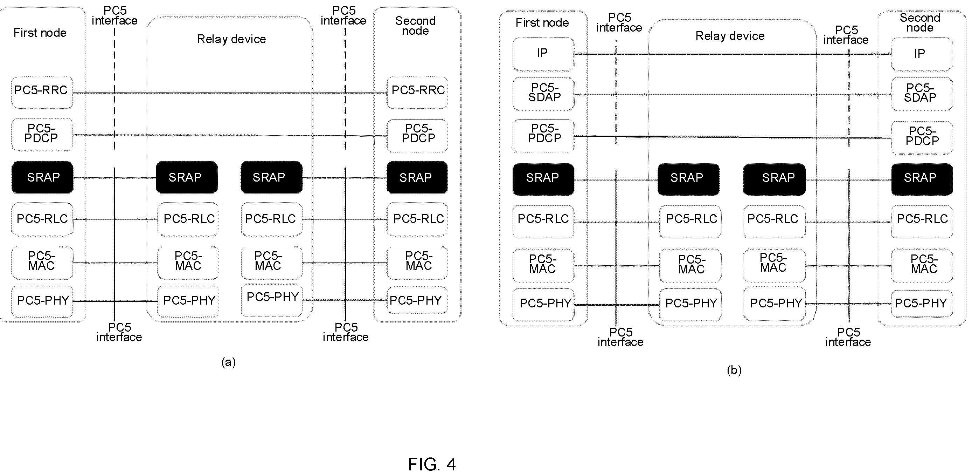

In some embodiments, FIG. 4 is a protocol stack architecture of a layer 2 relay according to some embodiments. The (a) in FIG. 4 is a control plane protocol architecture; and the (b) in FIG. 4 is a user plane protocol architecture.

As shown in FIG. 4, the protocol stack architecture of the layer 2 relay includes the protocol stack 105 of the first node 100, the protocol stack 205 of the relay device 200, and a protocol stack of the second node 300.

A sidelink relay adaptation protocol (SRAP) layer is introduced into the protocol stack architecture of the layer 2 relay provided in FIG. 4, so as to implement a forwarding and routing function of the layer 2. In the protocol stack architecture of the layer 2 relay provided in FIG. 4, the relay operation occurs in a radio link control (RLC) sublayer.

Lower layers of the protocol stack architecture, i.e., a physical (PHY) layer, a media access control (MAC) layer, an RLC layer and an SRAP layer, are terminated between the relay device 200 and each node (i.e., the first node 100 or the second node 300), respectively; and a service data unit (SDU) of an RLC protocol is forwarded, by the relay device 200, between two links directly connected to the relay device 200.

Upper layers of the protocol stack architecture, i.e., a packet data convergence protocol (PDCP) layer, a service data adaptation protocol (SDAP) layer and an internet protocol (IP) layer in a case of a user plane (UP) operation, and a direct communication interface (e.g., a PC5 interface) radio resource control (e.g., PC5 radio resource control, PC5-RRC) protocol layer in a case of a control plane operation, are terminated between the first node 100 and the second node 200 that are end-to-end. The protocol stack architecture is applicable to the control plane operation as well as the user plane operation, with different upper layer protocols for the two cases. In some embodiments, an L2 protocol stack architecture uses the relay device 200 as a communication intermediary without the relay device 200 participating in an actual protocol operation for connection control, so as to allow control and management for the PC5-RRC connection between the first node 100 and the second node 300. For example, the first node 100 may send a PC5-RRC message to the second node 300 (or vice versa) to configure respective aspects of the PC5-RRC connection (e.g., configuration of the protocol stack architecture, configuration of a sidelink radio access bearer (RAB)), etc.

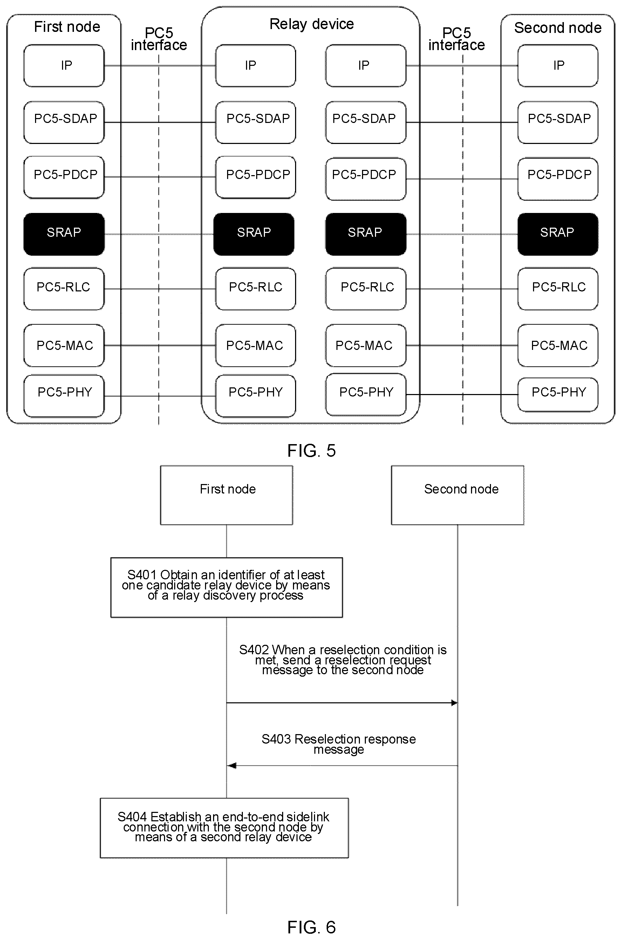

In some embodiments, FIG. 5 is a protocol stack architecture of a layer 3 relay according to some embodiments.

As shown in FIG. 5, the protocol stack architecture of the layer 3 relay includes the protocol stack 105 of the first node 100, the protocol stack 205 of the relay device 200, and a protocol stack of the second node 300.

An SRAP layer is introduced into the protocol stack architecture of the layer 3 relay provided in FIG. 5 to implement the forwarding and routing function of the layer 3. In the protocol stack architecture of the layer 3 relay provided in FIG. 5, the relay operation occurs at an IP layer. All protocol layers (i.e., a PHY layer, an MAC layer, an RLC layer, an SRAP layer, a PDCP layer, an SDAP layer, and an IP layer) are terminated between the relay device 200 and a node (e.g., the first node 100 or the second node 300), and IP data is packeted at the relay device 200. In the protocol stack architecture of the layer 3 relay, the IP data is allowed to flow between nodes (e.g., the first node 100 or second node 300) through the relay device 200, while each wireless link between the relay device 200 and a node (e.g., the first node 100 or the second node 300) is independently managed.

In some embodiments, an IP address of the first node 100 or an IP address of the second node 300 may be allocated by the relay device 200, and the relay device 200 routes an IP data packet to the first node 100 or the second node 300 by performing network address translation (NAT). In some other embodiments, the IP address of the first node 100 or the IP address of the second node 300 is known to both nodes and may be routed between the two nodes. In this case, the relay device 200 may serve as an IP router.

In some implementations, end-to-end security is established between the first node 100 and the second node 300, and the PDCP layer is terminated with the first node 100 and the second node 300. Therefore, an end-to-end PC5 signaling protocol (e.g., PC5-S, PC5-Signaling) message between the first node 100 and the second node 300 will not be disclosed on the relay device 200, since the relay device 200 does not process an end-to-end PC5-S message. The PC5 signaling protocol is used for the control plane signaling on PC5, such as establishment, maintenance, and releasing of a secure layer 2 link on PC5. The PC5 signaling protocol message is sent through a unicast destination layer 2 identity (ID).

Exemplarily, an operation that the relay device 200 receives a data packet that is mapped by the first node 100 according to a set mapping relationship to a first sidelink bearer between the first node 100 and the relay device 200, for example, may be implemented as that: the relay device 200 receives a data packet sent from the first node 100, where the data packet mentioned above is mapped by the first node 100 to the first sidelink bearer between the first node 100 and the relay device 200, and is transmitted to the relay device 200.

Exemplarily, an operation that the relay device 200 maps a data packet to a second sidelink bearer between the relay device 200 and the second node 300 according to a set mapping relationship and transmits the data packet to the second node 300, for example, may be implemented as that: the relay device 200 identifies the second sidelink bearer of the second node 300 to which the data packet belongs, maps the data packet to the second sidelink bearer between the relay device 200 and the second node 300, and transmits the data packet to the second node 300.

The set mapping relationship mentioned above refers to a mapping relationship between the first sidelink bearer and the second sidelink bearer configured (e.g., preconfigured or predefined) by the base station, that is, the first node 100 or the second node 300 maps a data packet from the second sidelink bearer to the first sidelink bearer according to the mapping relationship configured by the base station. Exemplarily, the predefined mapping relationship between the first sidelink bearer and the second sidelink bearer may be that: the protocol defines that a second sidelink signaling radio bearer (SRB) 0 is mapped to a PC5 RLC bearer associated with a first sidelink logical channel identity (LCID) 0, and a second sidelink SRB1 is mapped to a PC5 RLC bearer associated with a first sidelink logical channel LCID1, and so on. It can be understood that LCID0 and LCID1 are merely examples, which are not limited in the embodiments of the present disclosure.

For ease of understanding, the process of generation and transmission of a data packet is described below in the form of an example.

Exemplarily, first, an upper layer of the first node 100 generates a data packet, maps the data packet or a sidelink PC5-RRC signaling to a PDCP entity of a corresponding sidelink DRB (data radio bearer) or SRB based on the fifth-generation mobile communication technology (5G) sidelink quality of service (QoS) processing rules and/or bearer configuration, and performs an SL-PDCP layer operation, such as header compression, encryption, integrity protection, packet encapsulation, etc. Secondly, the first node 100 maps an SL-PDCP protocol data unit (PDU) to a PC5 RLC bearer between the first node 100 and the relay device 200. Again, the first node 100 maps the SL-PDCP PDU to the PC5 RLC bearer based on the mapping relationship of the base station, then performs RLC, MAC or PHY layer processing, and sends the data packet to the relay device 200 through a sidelink resource.

The relay device 200 receives and parses the data packet sent from the first node 100, identifies that the data packet is a data packet that needs to be forwarded to the second node 300 and identifies the sidelink bearer of the second node 300 to which the data packet belongs, and maps the data packet that needs to be forwarded to the sidelink bearer between the second node 300 and the relay device 200 and transmits the data packet to the second node 300.

After the data forwarded from the relay device 200 is received by the second node 300, the second node 300 parses the data packet and delivers the data packet to a corresponding PDCP entity. If received data is a control plane signaling, the second node 300 further delivers the data packet to the RRC layer for processing.

If there is a one-to-one mapping relationship between the PC5 RLC bearer and the SL-SRB/DRB of the first node 100, an adaptation layer may not be required between the first node 100 and the relay device 200. If multiple SL-SRBs or DRBs of the first node 100 may be mapped to a same PC5 RLC bearer, which SRB/DRB of the second node 300 the current data packet belongs to may be indicated through an adaptation layer between the first node 100 and the relay device 200, so that after the relay device 200 forwards the data packet to the second node 300, the second node 300 can identify the data packet and deliver the data packet to a receiving PDCP entity of a corresponding SL-SRB/DRB. For example, a header in the adaptation layer between the first node 100 and the relay device 200 may include an identifier or an index of a second bearer of the second node 300.

Exemplarily, the first node 100 mapping and/or delivering a data packet on the second bearer to the adaptation layer for processing, includes: adding a header of the adaptation layer, where the header of the adaptation layer includes at least one of: the identifier or index of the second bearer of the second node 300, and a relay forwarding indication.

In order to enable the relay device 200 to distinguish whether the received data packet is data that is terminated at the relay device 200 itself or data that needs to be forwarded after the relay device 200 receives the data packet, the following method may be used.

A PC5 RLC bearer dedicated to forwarding data is used. For example, the first node 100 and the relay device 200 negotiate, through a PC5 RRC signaling, which PC5 RLC bearers or logical channel identifiers (PC5 RLC bearer identifiers or LCIDs) are dedicated to forwarding data; or, define which logical channel identifiers (i.e., all LCIDs between LCID x and LCID y) are dedicated to forwarding data.

Whether the current data packet is data that terminates at the relay device 200 itself or data that needs to be forwarded is indicated through the adaptation layer between the first node 100 and the relay device 200. For example, whether the relay device 200 needs to forward the data is indicated through 1 bit or a relay forwarding indication field in the header of the adaptation layer.

An ordinary unicast link connection between a source node (e.g., the first node 100 or the second node 300) and the relay device 200 and a PC5 link connection for relay forwarding may correspond to PC5 connections with different source layer 2 identifiers and target layer 2 identifiers, and the relay device 200 may distinguish the ordinary unicast link connection and the PC5 link connection for the relay forwarding by the source layer 2 identifier and the target layer 2 identifier in an MAC subheader.

It should be noted that the system architecture and application scenarios described in the embodiments of the present disclosure are for the purpose of explaining the technical solutions of the embodiments of the present disclosure more clearly, and do not constitute a limitation on the technical solutions provided in the embodiments of the present disclosure. Those of ordinary skilled in the art should know that, with the evolution of the system architecture and the emergence of new business scenarios, the technical solutions provided in the embodiments of the present disclosure are also applicable to similar technical problems.

A sidelink relay reselection method provided in the embodiments of the present disclosure is introduced in detail below.

As shown in FIG. 6, the sidelink relay reselection method provided in the embodiments of the present disclosure may be implemented as the following steps: S401 to S404.

In S401, a first node obtains an identifier of at least one candidate relay device through a relay discovery process.

The relay discovery process mentioned above refers to a process in which a first node discovers other devices (e.g., a relay device) in proximity to the first node by sending or receiving discovery information.

Exemplarily, other relay devices in a network may send a discovery message, and the first node discovers and identifies a relay device by detecting the discovery message, thereby determining a relay discovery device list for the first node. In some embodiments, the discovery message mentioned above carries identification information of a message sender (e.g., a device ID of the message sender). Exemplarily, in a case where the message sender is a relay device 1, the identification information is the ID of the relay device 1.

Exemplarily, the first node may send a request message for discovering a relay device; and after the message is detected by other device, other devices in the network judge whether they are the device requested by the message (i.e., judge whether other devices in the network themselves are a relay device) or determine whether other devices in the network themselves are to be discovered, and then determine whether to send a corresponding response message according to a judged result. The first node determines the relay discovery device list for the first node by detecting a response signal sent from other devices in the network.

In some embodiments, the at least one candidate relay device mentioned above is a relay device whose signal quality of a sidelink with the first node is greater than a third preset threshold and in the relay discovery device list for the first node.

It can be understood that the first node discovers the relay device in proximity to the first node through the relay discovery process, and forms the relay discovery device list for the first node. Since the relay discovery device list for the first node may include multiple relay devices, at least one candidate relay device having a better signal quality of a sidelink with the first node may be selected from the relay discovery device list in the embodiments of the present disclosure. In this way, a relay device may be reselected from the at least one candidate relay device with the better signal quality, so as to enhance the quality of the sidelink between the reselected relay device and the first node or the second node.

In S402, in a case where a reselection condition is satisfied, the first node sends a reselection request message to the second node.

The reselection request message is used to request to reselect the relay device.

In some embodiments, the reselection request message includes an identifier of the at least one candidate relay device. It can be understood that the at least one candidate relay device mentioned above is a relay device with a better quality selected by the first node from the relay discovery device list for the first node. Therefore, the first node informs the second node of the identifier of the at least one candidate relay device, and a suitable new relay device is selected by the second node from the at least one candidate relay device.

In some embodiments, the identifier of the at least one candidate relay device in the reselection request message mentioned above is sequentially ranked according to a level of the signal quality of the at least one candidate relay device. For example, a candidate relay device with a high signal quality is ranked first, and a candidate relay device with a lowest signal quality is ranked last. It can be understood that after the identifier of the at least one candidate relay device is sequentially ranked according to the levels of the signal qualities of the candidate relay devices, the identifier of the at least one candidate relay device is sent to the second node, so that the second node may intuitively know the level of the signal quality of the at least one candidate relay device.

In some other embodiments, the reselection request message mentioned above further includes: a relay reselection indication and an identifier of the second node. It can be understood that the relay reselection indication is used to indicate the second node to reselect a relay device.

In some embodiments, in a case of a layer 2 relay, the identifier mentioned above is a layer 2 ID; or, in a case of a layer 3 relay, the identifier mentioned above is an IP address.

In some embodiments, the S402 mentioned above may be implemented as that: in a case where the reselection condition is satisfied, the first node sends a reselection request message to the second node. Exemplarily, the first node sends the reselection request information to a first relay device; and then, the first relay device sends the reselection request information to the second node.

In some other embodiments, the S402 mentioned above may be implemented as follows: in a case where the reselection condition is satisfied, the first node sends a reselection request message to the second node through a third relay device. Exemplarily, the first node sends the reselection request information to the third relay device; and then, the third relay device sends the reselection request information to the second node.

The third relay device is a relay device that has established a communication connection with the second node; or, the third relay device is a relay device whose discovery device list includes the second node.

It can be understood that in a case where the first relay device fails, the first node cannot send a reselection request message to the second node, and thus the first node reselects a third relay device and sends a reselection request message to the second node through the third relay device. To ensure that the second node can receive the reselection request message, upon selecting the third relay device, the first node selects the third relay device from the relay devices that have established a connection with the second node; or, selects the third relay device from the relay devices that can discover the second node.

In some embodiments, the reselection condition mentioned above includes at least one of the following.

Condition 1: a signal quality of the sidelink between the first node and the first relay device is less than or equal to a first preset threshold.

A signal of the sidelink may include at least one of: sidelink reference signal received power (SL-RSRP), and sidelink discovery reference signal received power (SD-RSRP). In some embodiments, when there is communication on the sidelink, SL-RSRP is adopted; and when there is no communication on the sidelink, SD-RSRP is adopted.

In some embodiments, the first preset threshold mentioned above may be informed to the first node, the second node and the first relay device by a system broadcast message or a dedicated radio resource control (RRC) signaling; or, the first preset threshold may be a pre-configured value. Exemplarily, if the first node, the second node and the first relay device are within the coverage of the next generation Node B (gNB) base station, the first node, the second node and the first relay device are informed of the first preset threshold by adopting the system broadcast message and the dedicated RRC signaling; and if the first node, the second node and the first relay device are outside the coverage of the gNB base station, a pre-configured value is adopted as the first preset threshold.

In some embodiments, the signal quality of the sidelink mentioned above may be obtained through measurement by any one of the first node, the second node or the first relay device.

In a case where the signal quality of the sidelink mentioned above is obtained through measurement by the second node or the first relay device, the second node or the first relay device sends a measurement result to the first node. The measurement result mentioned above may include: a comparison result of the signal quality of the sidelink between the first node and the first relay device with the first preset threshold; and/or a comparison result of the signal quality of the sidelink between the second node and the first relay device with the first preset threshold.

Condition 2: the signal quality of the sidelink between the second node and the first relay device is less than or equal to the first preset threshold.

Condition 3: a relay reselection timer of the first node, the first relay device or the second node times out.

The relay reselection timer is started when establishment of an end-to-end sidelink connection between the first node and the second node is completed.

Exemplarily, if the reselection timer of the first node times out, the first node sends a reselection request message to the second node, so as to request to reselect the relay device.

Exemplarily, if the reselection timer of the first relay device times out, the first relay device sends timeout indication information to the first node, so as to indicate the first node to send a reselection request message to the second node.

Exemplarily, if the reselection timer of the second node times out, the second node sends timeout indication information to the first node, so as to indicate the first node to send a reselection request message to the second node.

Condition 4: the first relay device cannot provide a sidelink service required by the first node.

It can be understood that if an upper node of the first node needs to update a type of the sidelink service but the current first relay device does not support the updated type of the sidelink service, the upper node of the first node may send a relay reselection indication message to the first node, so that the first node sends a reselection request message to the second node in response to the relay reselection indication message.

Condition 5: a sidelink load between the first relay device and the first node is greater than or equal to a second preset threshold.

It can be understood that in a case where the sidelink load is too high, the efficiency of the data transmission on the sidelink will be affected. Therefore, in a case where the sidelink load is too high, the first node may initiate a reselection request message to the second node to request to reselect the relay device.

Condition 6: a sidelink load between the first relay device and the second node is greater than or equal to the second preset threshold.

Condition 7: the signal quality of the sidelink between the first node and the first relay device is lower by a specified value than the signal qualities of the sidelinks between the first node and other candidate relay devices.

The other candidate relay devices mentioned above are located in the proximate positions of the first node. For example, the first node may be located in the discovery device lists for other candidate relay devices.

In some embodiments, the specified value mentioned above may be informed to the first node, the second node and the first relay device by a system broadcast message or a dedicated RRC signaling; or, the specified value may be a pre-configured value. Exemplarily, if the first node, the second node and the first relay device are within the coverage of the gNB base station, the specified value is informed to the first node, the second node and the first relay device by adopting the system broadcast message or the dedicated RRC signaling; and if the first node, the second node and the first relay device are outside the coverage of the gNB base station, a pre-configured value is adopted as the specified value.

Exemplarily, the first node may receive discovery messages from other candidate relay devices (exemplarily, these discovery messages may include the layer 2 identifier of the first node). If the first node discovers that the signal quality between the first node and the other candidate relay devices is higher by a specified value than the signal quality between the first node and the first relay device, it means that there is a relay device that is better than the current first relay device. Therefore, the first node may send a reselection request message to the second node, so as to request to reselect the relay device.

Condition 8: the signal quality of the sidelink between the second node and the first relay device is lower by the specified value than the signal qualities of the sidelink between the second node and the other candidate relay devices.

The other candidate relay devices mentioned above are located in proximate positions of the second node. For example, the second node may be located in the discovery device lists for the other candidate relay devices.

Exemplarily, the second node may receive discovery messages from other candidate relay devices (exemplarily, the discovery messages may include the layer 2 identifier of the second node). If the second node discovers that the signal quality between the second node and the other candidate relay devices is higher by a specified value than the signal quality between the second node and the first relay device, it means that there is a relay device that is better than the current first relay device. Therefore, the second node may send a relay reselection indication message to the first node, so that the first node sends a reselection request message to the second node in response to the relay reselection indication message.

Condition 9: the first node receives a relay reselection indication message.

The relay reselection indication message mentioned above is originated from one or more of devices as follows: an upper node of the first node, the first relay device and the second node.

It can be understood that, in a case where the first node receives a relay reselection indication message from other relay devices, the first node may initiate a reselection request message to the second node, so as to request to reselect the relay device.

Exemplarily, in a case where an upper node of the first node needs to update a type of the sidelink service between the first node and the first relay device but the current first relay device does not support the updated type of the sidelink service, the upper node of the first node sends a relay reselection indication message to the first node.

Exemplarily, in a case where the first relay device detects that: a sidelink load between the first relay device and the first node is greater than or equal to a second preset threshold; or a sidelink load between the first relay device and the second node is greater than or equal to the second preset threshold, the first relay device sends a relay reselection indication message to the first node.

Exemplarily, in a case where the second node detects that: a signal quality of the sidelink between the first node and the first relay device is less than or equal to a first preset threshold; or in a case where a signal quality of the sidelink between the second node and the first relay device is less than or equal to the first preset threshold, the second node sends a relay reselection indication message to the first node.

Condition 10: the sidelink between the first node and the first relay device fails.

Exemplarily, a sidelink failure mentioned above refers to that: an SL RLC entity indicates that the maximum number of retransmissions is reached; or, an SL MAC entity indicates that the maximum number of consecutive discontinuous transmissions is reached; or, an SL PDCP entity indicates that an integrity check of the SL SRB fails.

Exemplarily, the sidelink failure mentioned above may be detected by any one of the first node, the second node or the first relay device.

In a case where the sidelink failure mentioned above is detected by the second node or the first relay device, the second node or the first relay device sends failure indication information to the first node. The failure indication information mentioned above is used to indicate a sidelink failure between the first node and the first relay device.

Condition 11: the sidelink between the second node and the first relay device fails.

In a case where a sidelink failure mentioned above is detected by the second node or the first relay device, the second node or the first relay device sends failure indication information to the first node. The failure indication information mentioned above is used to indicate that a sidelink between the second node and the first relay device fails.

As an implementation, in a case where the sidelink between the first node and the first relay device fails; or, in a case where the sidelink between the second node and the first relay device fails, the first node cannot send a reselection request message to the second node, and therefore, the first node may send a reselection request message to the second node through a third relay device.

As another implementation, in a case where the sidelink between the first node and the first relay device fails; or, in a case where the sidelink between the second node and the first relay device fails, if the second node may directly receive a reselection request message sent from the first node, a direct sidelink may be established between the first node and the second node.

In S403, the second node sends a reselection response message to the first node.

The reselection response message mentioned above includes an identifier of a second relay device.

The second relay device is one of the at least one candidate relay device. In some embodiments, the second relay device is a relay device in the at least one candidate relay device and establishing a sidelink with the second node; or, the second relay device is a relay device in the at least one candidate relay device and having a highest signal quality of the sidelink with the second node.

In some embodiments, after the reselection request message sent from the first node is received, the second node selects the second relay device from the at least one candidate relay device; and then, the second node sends the reselection request message to the first node.

Exemplarily, if there is no relay device in the at least one candidate relay device and establishing a sidelink with the second node, and at the same time, the second node also has not received a discovery message sent from any one candidate relay device of the at least one candidate relay device, the second node sends a discovery message. The discovery message includes the ID of the at least one candidate relay device; and then, in a case where the second node has received a response message, the candidate relay device that sends the response message is used as the second relay device.

In some embodiments, the reselection response message further includes: a relay reselection indication and an identifier of the first node.

In some embodiments, in a case of the layer 2 relay, the identifier mentioned above is a layer 2 identity (ID); or, in a case of the layer 3 relay, the identifier mentioned above is an Internet Protocol (IP) address.

In some embodiments, after the reselection request message is received, the second node fails to select the second relay device from the at least one candidate relay device, the method mentioned above further includes: sending, by the second node, a reselection failure message to the first node.

In S404, the first node establishes an end-to-end sidelink connection with the second node through a second relay device.

In some embodiments, the method mentioned above further includes that the second node establishes an end-to-end sidelink connection with the first node through the second relay device.

As an implementation, the S404 mentioned above may be implemented as: the first node sends a direct communication request (DCR) message to the second node through the second relay device.

The DCR message is used to request the second node to perform sidelink communication with the first node through the second relay device. In some embodiments, the DCR message includes an identifier of the second relay device and an identifier of the second node.

The first node receives a direct communication accept (DCA) message sent from the second node through the second relay device. Exemplarily, the DCA message includes the identifier of the second relay device and the identifier of the first node.

In some embodiments, after the DCA message is received, the first node may establish an end-to-end sidelink connection with the second node through the second relay device.

It can be understood that the end-to-end sidelink connection refers to: a sidelink connection between the first node and the second node, a sidelink connection between the first node and the first relay device, and a sidelink connection between the first relay device and the second node, which are components of the end-to-end sidelink connection.

As another implementation, the S404 mentioned above may also be implemented as that: the first node sends a reselection confirmation message to the second node through the second relay device; and the second node switches, after receiving the reselection confirmation message, transmitted IP data to a sidelink passing through the second relay device.

It can be understood that in a scenario of the layer 3 relay, the first node may send a reselection confirmation message to the second node through the second relay device; and then, the second node may switch, after receiving the reselection confirmation message, the transmitted IP data to the sidelink passing through the second relay device, so as to achieve an end-to-end sidelink connection of the first node with the first node through the second relay device.

In summary, the embodiments of the present disclosure provide a sidelink relay reselection method. In a case where a first node performs sidelink communication with a second node through a first relay device, the first node may discover at least one candidate relay device through a discovery process; and then, in a case where a reselection condition is satisfied, the first node sends a reselection request message to the second node (the reselection request message may include an identifier of at least one candidate relay device), so as to request to reselect the relay device. Accordingly, in a case where the second node receives the reselection request message, the second node may select a second relay device from the at least one candidate relay device and send a reselection response message (the reselection response message includes an identifier of the second relay device) to the first node, so that an end-to-end sidelink connection may be established between the first node and the second node through the second relay device. It can be seen that the method provided in the embodiments of the present disclosure stipulates that in a case where the reselection condition is satisfied, a new relay device may be reselected and an end-to-end sidelink connection is established based on the new relay device. In this way, the quality of the sidelink and the efficiency of the data transmission based on the sidelink can be enhanced.

For ease of understanding, another implementation of the sidelink relay reselection method provided in S401 to S404 mentioned above is given below.

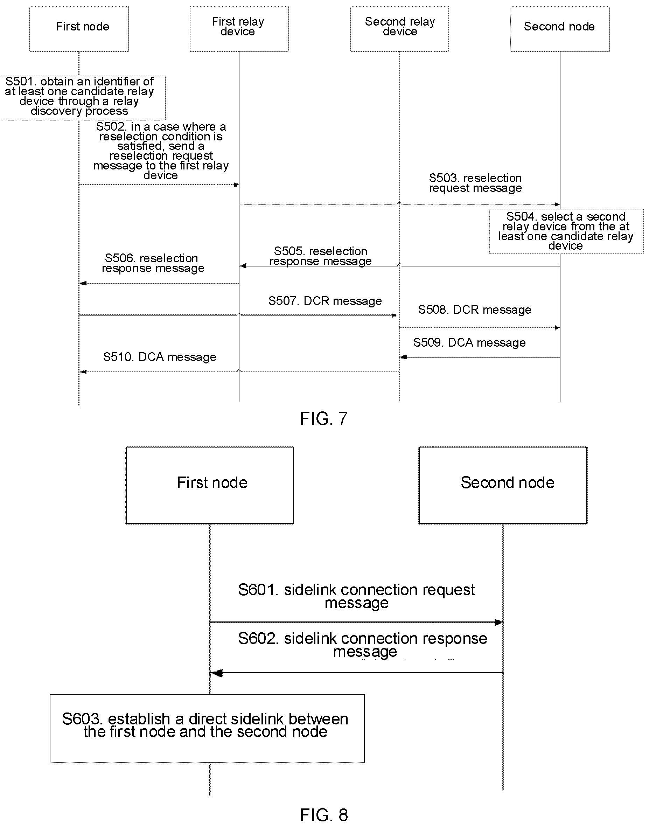

As shown in FIG. 7, the method may include the following steps S501 and S510.

In S501, a first node obtains an identifier of at least one candidate relay device through a relay discovery process.

In S502, in a case where a reselection condition is satisfied, the first node sends a reselection request message to a first relay device.

The reselection request message includes: a relay reselection indication, an identifier of a second node, and the identifier of the at least one candidate relay device.

In S503, the first relay device sends the reselection request message to a second node.

In some embodiments, after the reselection request message is received, the first relay device determines that the reselection request message needs to be sent to the second node according to the identifier of the second node included in the reselection request message.

In S504, after the reselection request message is received, the second node selects a second relay device from the at least one candidate relay device.

In S505, the second node sends a reselection response message to the first relay device.

The reselection response message mentioned above includes: a relay reselection indication, an identifier of the first node and an identifier of the second relay device.

In some embodiments, after the reselection request message is received, the second node fails to select the second relay device from the at least one candidate relay device, and then, the method mentioned above further includes that: the second node sends a reselection failure message to the first node through the first relay device.

In S506, the first relay device sends the reselection response message to the first node.

In S507, the first node sends a DCR message to the second relay device.

The DCR message includes the identifier of the second relay device and the identifier of the second node.

In S508, the second relay device sends the DCR message to the second node.

In some embodiments, after the DCR message is received, the second relay device determines that the DCR message needs to be sent to the second node according to the identifier of the second node included in the DCR message.

In S509, the second node sends a DCA message to the second relay device.

In some embodiments, in a case where after the DCR message is received, the second node determines that the DCR message is received from the second relay device selected by the second node, the second node sends a DCA message to the first node through the second relay device.

Exemplarily, the DCA message includes the identifier of the second relay device and the identifier of the first node.

In S510, the second relay device sends the DCA message to the first node.

In some embodiments, after the DCA message is received, the second relay device determines that the DCA message needs to be sent to the first node according to the identifier of the first node included in the DCA message.

In some embodiments, the method mentioned above further includes that: the second node establishes a sidelink with the second relay device, and the first node establishes a sidelink with the second relay device. In this way, after the interaction for the DCR message and the DCA message is completed between the first node and the second node, an end-to-end sidelink connection between the first node and the second node through the second relay device may be achieved.

It can be understood that the S507 to S510 mentioned above is an implementation that "the first node establishes the end-to-end sidelink connection with the second node through the second relay device", which is of course not limited to thereto upon an actual implementation. For example, an operation that "the first node establishes the end-to-end sidelink connection with the second node through the second relay device" may also be implemented as follows: step a1 to step a3.

In step a1, the first node sends a reselection confirmation message to the second relay device.

In step a2, after the reselection confirmation message is received, the second relay device sends the reselection confirmation message to the second node, and turns off the sidelink connection between the first node and the second node and passing through the first relay device.

In step a3, after the reselection confirmation message is received, the second node switches the transmitted IP data to the sidelink passing through the second relay device.

In summary, the sidelink relay reselection method provided in the embodiments of the present disclosure can reselect a relay device in a case where the reselection condition is satisfied, and establish an end-to-end sidelink connection based on the selected relay device. In this way, the quality of the sidelink and the efficiency of the data transmission based on the sidelink can be enhanced.

The embodiments of the present disclosure further provide a communication method for establishing a direct sidelink between a first node and a second node in a case where a reselection condition is satisfied and a signal quality of the direct sidelink between the first node and the second node is greater than or equal to a fourth preset threshold.

For example, as shown in FIG. 8, the method mentioned above may be implemented as follows: steps S601 to S603.

In S601, a first node sends a sidelink connection request message to a second node.

The sidelink connection request message is used to request the second node to communicate with the first node through a direct sidelink.

In some embodiments, the S601 mentioned above may be implemented as follows: step b1 and step b2.

In step b1, in a case where a reselection condition is satisfied, the first node detects a signal quality of a direct sidelink between the first node and the second node.

In step b2, in a case where the signal quality of the direct sidelink between the first node and the second node is greater than or equal to a fourth preset threshold, the first node sends a sidelink connection request message to the second node.

In S602, the second node sends a sidelink connection response message to the first node.

The sidelink connection response message is used to agree the second node to communicate with the first node through the direct sidelink.

In some embodiments, the S602 mentioned above may be implemented as follows: the second node detects, after receiving the sidelink connection request information sent from the first node, the signal quality of the direct sidelink between the first node and the second node; and in a case where the signal quality of the direct sidelink between the first node and the second node is greater than or equal to a fourth preset threshold, the second node sends a sidelink connection response message to the first node.

In S603, a direct sidelink is established between the first node and the second node.

It can be understood that, in a case where the reselection condition is satisfied, if the signal quality of the direct sidelink between the first node and the second node is greater than the fourth preset threshold, a direct sidelink may be established between the first node and the second node. In this way, there is no need to reselect the relay device, and the enhancement of the quality of the sidelink and the enhancement of the efficiency of the data transmission can also be achieved.

In some embodiments, in order to ensure transmission reliability, U2U relay communication and U2U direct communication may exist at the same time. Exemplarily, an end-to-end sidelink connection may be made between the first node and the second node through a relay device (e.g., a second relay device), and a direct sidelink may also be established between the first node and the second node.

In some other embodiments, in order to achieve service continuity, the U2U relay communication and the U2U direct communication may be switched to each other. Exemplarily, an end-to-end sidelink connection may be made between the first node and the second node through a relay device (e.g., the second relay device); or, a direct sidelink may be established between the first node and the second node.

For ease of understanding, the sidelink relay reselection method provided in the embodiments of the present disclosure is described below by taking the layer 2 relay and the layer 3 relay as an example, respectively. The main difference between the layer 2 relay reselection process and the layer 3 relay reselection process is that: the layer 2 ID is adopted as the identifier of the source UE or the target UE in the reselection request of the layer 2 relay; and the IP address is adopted as the identifier of the source UE or the target UE in the reselection request of the layer 3 relay.

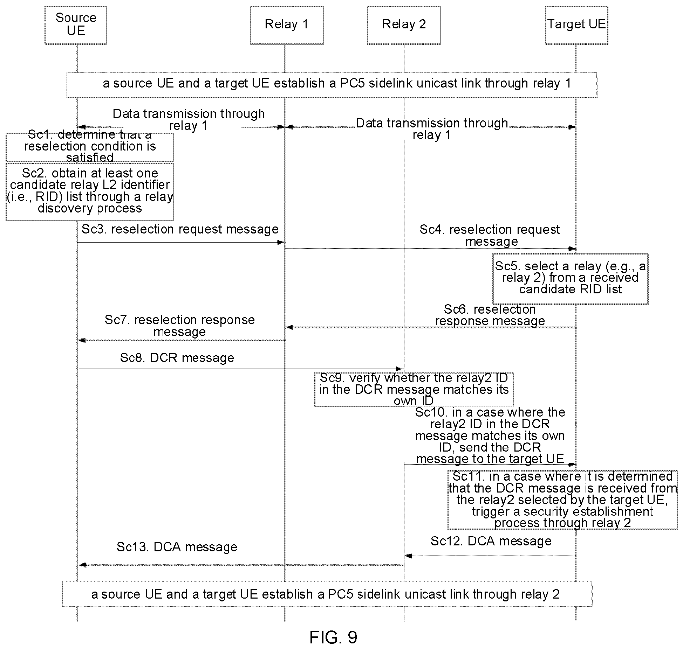

Exemplarily, FIG. 9 is a schematic flowchart of the layer 2 relay reselection. As shown in FIG. 9, a PC5 sidelink unicast link is established between a source UE and a target UE through relay 1. The sidelink data between the source UE and the target UE is exchanged through the relay 1.

Exemplarily, the process of the layer 2 relay reselection mainly includes the following steps: Sc1 to Sc13.

In Sc1, the source UE determines that a reselection condition is satisfied.

In Sc2, the source UE obtains at least one candidate relay L2 identifier (i.e., RID) list through a relay discovery process.

In Sc3, the source UE sends a reselection request message to a relay 1.

The reselection request message includes: a relay reselection indication, a candidate RID list and a target UE ID.

In Sc4, the relay 1 sends the reselection request message to the target UE.

In Sc5, the target UE selects a relay (e.g., a relay 2) from a received candidate RID list.

In Sc6, the target UE sends a reselection response message to the relay 1.

The reselection response message includes: a relay reselection indication, an identifier of the relay 2 selected by the target UE, and a source UE ID.

In Sc7, the relay 1 sends the reselection response message to the source UE.

In some embodiments, establishing an end-to-end PC5 sidelink connection by using the newly selected relay 2 includes the following implementations.

Implementation 1, as shown in FIG. 9, includes the following Sc8 to Sc13.

In Sc8, the source UE sends a DCR message to a relay 2.

The DCR message includes a target UE ID and a relay 2 ID.

In Sc9, after receiving the DCR message, the relay 2 verifies whether the relay 2 ID in the DCR message matches its own ID.

In Sc10, in a case where the relay 2 ID in the DCR message matches its own ID, the relay 2 sends the DCR message to the target UE.

In Sc11, in a case where the target UE determines that the DCR message is received from the relay 2 selected by the target UE, the target UE triggers a security establishment process through the relay 2.

It should be noted that if the security context used for the unicast link of PC5 passing through the relay 1 is reused for the unicast link of PC5 of the reselected relay 2, the security establishment process may be skipped, thereby achieving faster link establishment and path switching.

In a case where the sidelink data is ready to switch to the unicast link of PC5 passing through the relay 2, the association between an application layer identifier and the unicast link of PC5 passing through the relay 1 will be updated to the unicast link of PC5 passing through the relay 2.

In Sc12, the target UE sends a DCA message to the relay 2.

In Sc13, the relay 2 sends the DCA message to the source UE.

After the source UE receives the DCA message, a new PC5 unicast link is established between the source UE and the target UE through the relay 2.

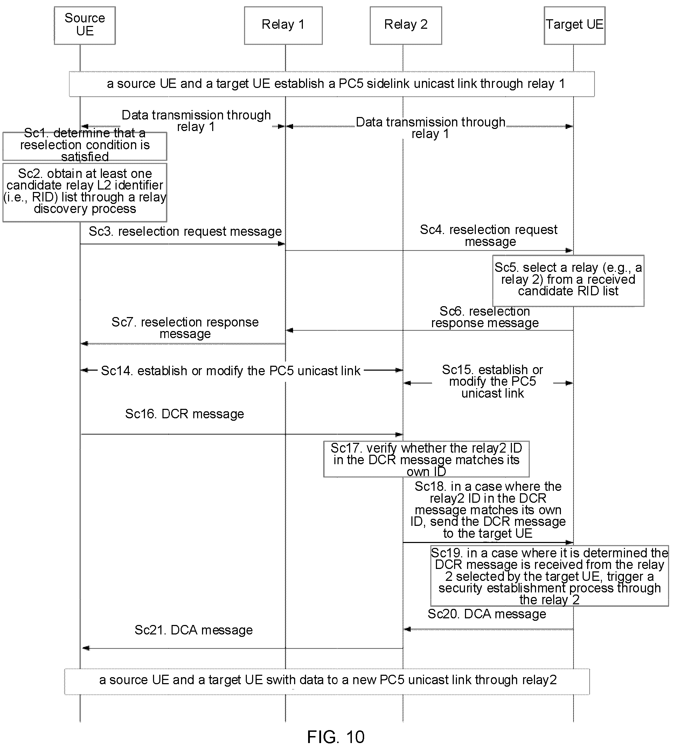

Implementation 2, as shown in FIG. 10, includes the following Sc14 to Sc21.

In Sc14, the source UE and the relay 2 establish or modify the PC5 unicast link.

It can be understood that if there is no PC5 link available for relaying between the source UE and the relay 2, the source UE needs to establish a new PC5 link, otherwise the source UE may modify the existing link to support communication between the source UE and the target UE.

In Sc15, the target UE and the relay 2 establish or modify the PC5 unicast link.

It can be understood that if there is no PC5 link available for relaying between the relay 2 and the target UE, the relay needs to establish a new PC5 link, otherwise the relay may modify the existing link to support communication between the source UE and the target UE.

It should be noted that the embodiments of the present disclosure do not limit the execution order of Sc14 and Sc15 mentioned above. Exemplarily, Sc14 may be executed first, and then Sc15 is executed; or, Sc15 may be executed first, and then Sc14 is executed; or, Sc14 and Sc15 may be executed simultaneously.

In Sc16, the source UE sends a DCR message to the relay 2.

In Sc17, after receiving the DCR message, the relay 2 verifies whether the relay 2 ID in the DCR message matches its own ID.

In Sc18, in a case where the relay 2 ID in the DCR message matches its own ID, the relay 2 sends the DCR message to the target UE.

In Sc19, in a case where the target UE determines that the DCR message is received from the relay 2 selected by the target UE, the target UE triggers a security establishment process through the relay 2.

In Sc20, the target UE sends a DCA message to the relay 2.

In Sc21, the relay 2 sends the DCA message to the source UE.

After the source UE receives the DCA message, the source UE and the target UE switch data to the new PC5 unicast link through the relay 2.

In some embodiments, the method mentioned above further includes that: the source UE or the target UE may end the PC5 unicast link through the relay 1.

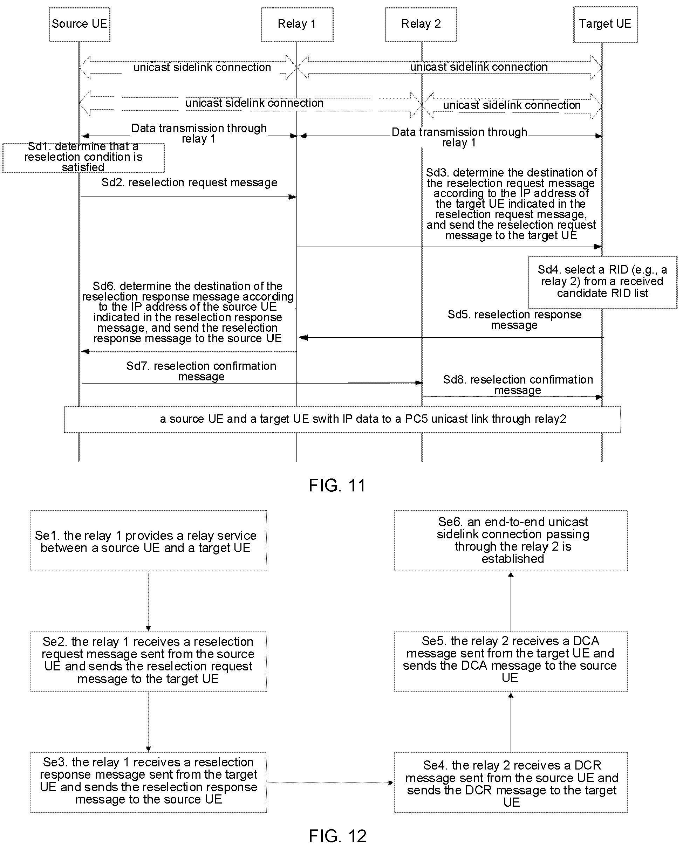

Exemplarily, FIG. 11 is a process of the layer 3 relay reselection. As shown in FIG. 11, the relay 1 establishes PC5 sidelink unicast links with the source UE and the target UE, respectively. The relay 2 establishes PC5 sidelink unicast links with the source UE and the target UE, respectively. Currently, the source UE exchanges data with the target UE through the relay 1.

Exemplarily, the process of the layer 3 relay reselection mainly includes the following steps: Sd1 to Sd8.

In Sd1, the source UE determines that a reselection condition is satisfied.

In Sd2, the source UE sends a reselection request message to a relay 1.

The reselection request message includes: a relay reselection indication, a candidate RID list, an IP address of a source UE and an IP address of a target UE which communicate with each other through the relay 1 (when the source UE communicates with multiple target UEs through the relay 1, the IP addresses of the multiple target UEs may be specified).

The candidate RID list mentioned above is determined according to the relay that establishes the PC5 unicast link with the source UE.

In Sd3, the relay 1 determines destination of the reselection request message according to the IP address of the target UE indicated in the reselection request message, and sends the reselection request message to the target UE.

In some embodiments, in a case where multiple target UEs are affected, the relay 1 sends the reselection request message to each of the multiple target UEs.

In Sd4, the target UE selects an RID (e.g., a relay 2) from a received candidate RID list.

Exemplarily, the target UE may select a RID that has established a PC5 unicast link; or, the target UE may also establish a new link with the selected RID.

In Sd5, the target UE sends a reselection response message to the relay 1.

The reselection response message includes: a relay reselection indication, an IP address of a source UE and an IP address of a target UE passing through the relay 1, an IP address of a target UE used through the relay 2, and an identifier of the relay 2 selected by the target UE.

In Sd6, the relay 1 determines the destination of the reselection response message according to the IP address of the source UE indicated in the reselection response message, and sends the reselection response message to the source UE.

In Sd7, the source UE acquires the identifier of the relay 2 from the reselection response message, and sends a reselection confirmation message to the relay 2.

The reselection confirmation message includes the IP address of the relay 2 and the IP address of the target UE.

In Sd8, the relay 2 receives the reselection confirmation message and sends the reselection confirmation message to the target UE.

After the target UE receives the reselection confirmation message, the source UE and the target UE switch the IP data to the PC5 unicast link passing through the relay 2.

In some embodiments, the method mentioned above further includes: turning off the sidelink connection between the source UE and the target UE passing through the relay 1.

For ease of understanding, the sidelink relay reselection method provided in the embodiments of the present disclosure is described below in terms of a relay device.

Exemplarily, FIG. 12 is a relay reselection method according to some embodiments, involving two relay devices: relay 1 and relay 2. The relay 1 is a relay device that currently provides a relay service between the source UE and the target UE. The relay 2 is a relay device reselected by the source UE and the target UE in a case where a reselection condition is satisfied. Exemplarily, the steps of the relay devices involved in the relay reselection method include the following Se1 to Se6.

In Se1, the relay 1 provides a relay service between a source UE and a target UE.

In Se2, the relay 1 receives a reselection request message sent by the source UE and sends the reselection request message to the target UE.

In Se3, the relay 1 receives a reselection response message sent from the target UE, and sends the reselection response message to the source UE.

In Se4, the relay 2 receives a DCR message sent from the source UE and sends the DCR message to the target UE.

In Se5, the relay 2 receives a DCA message sent by the target UE and sends the DCA message to the source UE.

In Se6, an end-to-end unicast sidelink connection passing through the relay 2 is established.

For ease of understanding, the sidelink relay reselection method provided in the embodiments of the present disclosure is described below in terms of a source UE (e.g., the first node shown in the embodiments of the present disclosure).

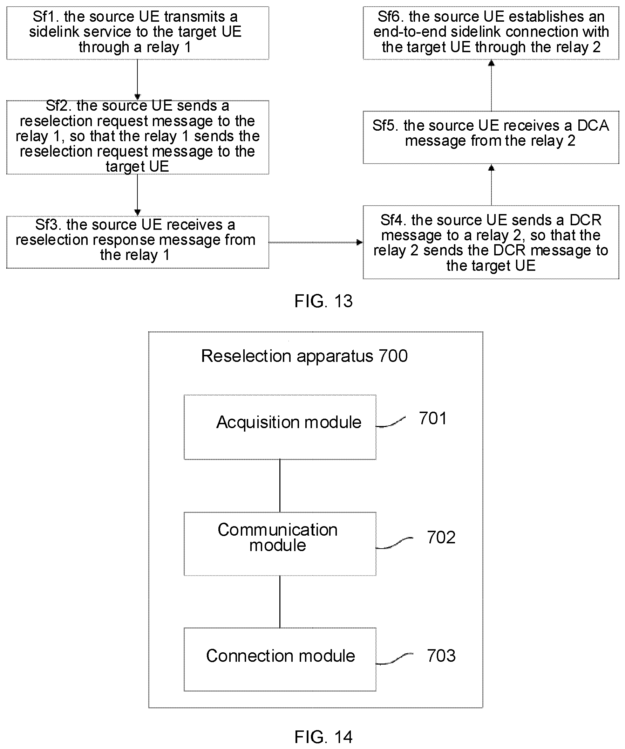

Exemplarily, as shown in FIG. 13, a first node may serve as a source UE, and in a case where a reselection condition is satisfied, send a reselection request message to a second node (serving as a target UE), so as to reselect a relay device. Exemplarily, the steps of the source UE involved in the relay reselection method include the following Sf1 to Sf6.

In Sf1, the source UE transmits a sidelink service to the target UE through a relay 1.

In Sf2, the source UE sends a reselection request message to the relay 1, so that the relay 1 sends the reselection request message to the target UE.

In Sf3, the source UE receives a reselection response message from the relay 1.

The reselection response message is received by the relay 1 from the target UE.

In Sf4, the source UE sends a DCR message to the relay 2, so that the relay 2 sends the DCR message to the target UE.

In Sf5, the source UE receives a DCA message from the relay 2.

The DCA message is received by the relay 2 from the target UE.

In Sf6, the source UE establishes an end-to-end sidelink connection with the target UE through the relay 2.

It can be understood that, for the reselection apparatus to achieve the functions mentioned above, the reselection apparatus contains corresponding hardware and/or software modules for executing respective functions. Those skilled in the art should easily realize that the algorithm steps of respective examples described in combination with the embodiments of the present disclosure can be implemented in the form of hardware or a combination of hardware and computer software in the embodiments of the present disclosure. Whether a certain function is executed in the hardware or the computer software-driven hardware depends on the specific application and restrictive conditions on design of the technical solution. Professional technicians may use different methods to implement the described functions for each specific application, but such implementation should not be considered beyond the scope of the present disclosure.

In some embodiments of the present disclosure, the reselection apparatus may be divided into functional modules according to the method embodiments mentioned above, for example, the reselection apparatus may be divided in a way that each function corresponds to each functional module, or that two or more than two functions are integrated into one functional module. The integrated module mentioned above may be implemented in the form of hardware, or may be implemented in the form of software. It should be noted that the division of the functional modules in the embodiments of the present disclosure is schematic, which is only a logical functional division, and there may be other manners to divide the functional modules in an actual implementation. The following takes adopting division of each functional module according to each function as an example for explanation.

FIG. 14 is a schematic diagram of a structure of a reselection apparatus according to some embodiments, applied to a first node; and the reselection apparatus may perform the sidelink relay reselection method provided in the method embodiments mentioned above. As shown in FIG. 14, the reselection apparatus 700 includes an acquisition module 701, a communication module 702, and a connection module 703.

The acquisition module 701 is configured to obtain an identifier of at least one candidate relay device through a relay discovery process.

The communication module 702 is configured to send a reselection request message to the second node in a case where a reselection condition is satisfied. The reselection request message is used to request to reselect a relay device; and the reselection request message includes the identifier of the at least one candidate relay device.

The communication module 702 is further configured to receive a reselection response message sent from the second node. The reselection response message includes an identifier of a second relay device; and the second relay device is one of the at least one candidate relay device.

The connection module 703 is configured to establish an end-to-end sidelink connection with the second node through the second relay device.

In some embodiments, the reselection condition mentioned above includes at least one condition that: a signal quality of a sidelink between the first node and a first relay device is less than or equal to a first preset threshold; a signal quality of a sidelink between the second node and the first relay device is less than or equal to the first preset threshold; a relay reselection timer of the first node, the first relay device or the second node times out, where the relay reselection timer is started upon completing establishment of an end-to-end sidelink connection between the first node and the second node; the first relay device is not capable of providing a sidelink service required by the first node; a sidelink load between the first relay device and the first node is greater than or equal to a second preset threshold; a sidelink load between the first relay device and the second node is greater than or equal to the second preset threshold; the first node receives a relay reselection indication message; the signal quality of the sidelink between the first node and the first relay device is lower by a specified value than signal qualities of sidelinks between the first node and other candidate relay devices; or the signal quality of the sidelink between the second node and the first relay device is lower by a specified value than signal qualities of sidelinks between the second node and other candidate relay devices.

In some embodiments, the relay reselection indication message mentioned above is originated from one or more of devices as follows: an upper node of the first node, the first relay device, and the second node.

In some embodiments, the reselection condition mentioned above further includes at least one condition that: a sidelink between the first node and the first relay device fails; or a sidelink between the second node and the first relay device fails.

In some embodiments, the at least one candidate relay device mentioned above is a relay device whose signal quality of a sidelink with the first node is greater than a third preset threshold and in a relay discovery device list for the first node.

In some embodiments, the second relay device mentioned above is a relay device in the at least one candidate relay device and establishing a sidelink with the second node; or, the second relay device is a relay device in the at least one candidate relay device and having a highest signal quality of the sidelink with the second node.

In some embodiments, the reselection request message further includes: a relay reselection indication and an identifier of the second node; and the reselection response message further includes: the relay reselection indication and an identifier of the first node.

In some embodiments, in a case of a layer 2 relay, the identifier is a layer 2 identity (ID); or, in a case of a layer 3 relay, the identifier is an internet protocol (IP) address.

In some embodiments, the communication module 702 mentioned above is configured to send the reselection request message to the second node through a third relay device. The third relay device is a relay device that has established a communication connection with the second node; or, the third relay device is a relay device whose discovery device list includes the second node.

In some embodiments, the connection module 703 mentioned above is configured to send a direct communication request message to the second node through the second relay device. The direct communication request message is used to request the second node to perform sidelink communication with the first node through the second relay device, and the direct communication request message includes an identifier of the second relay device and an identifier of the second node.

In some embodiments, the connection module 703 mentioned above is further configured to receive a direct communication response message sent from the second node through the second relay device.

In some embodiments, the communication module 702 mentioned above is further configured to send a sidelink connection request message to the second node in a case where a signal quality of a direct sidelink between the first node and the second node is greater than or equal to a fourth preset threshold. The sidelink connection request message is used to request the second node to communicate with the first node through the direct sidelink.

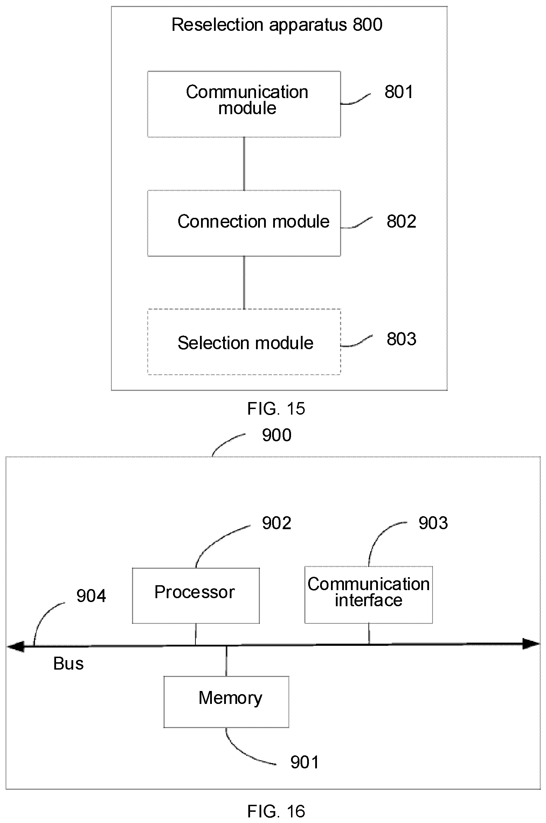

FIG. 15 is a schematic diagram of a structure of another reselection apparatus according to some embodiments, applied to the second node; and the reselection apparatus may perform the sidelink relay reselection method provided in the method embodiments mentioned above. As shown in FIG. 15, the reselection apparatus 800 includes a communication module 801 and a connection module 802. In some other embodiments, the reselection apparatus 800 mentioned above further includes a selection module 803.

The communication module 801 is configured to receive a reselection request message sent by a first node in a case where a reselection condition is satisfied. The reselection request message is used to request to reselect a relay device; and the reselection request message includes an identifier of at least one candidate relay device.

The communication module 802 is further configured to send a reselection response message to the first node. The reselection response message includes an identifier of a second relay device; and the second relay device is one of the at least one candidate relay device.

The connection module 803 is configured to establish an end-to-end sidelink connection with the first node through the second relay device.

In some embodiments, the reselection condition mentioned above includes at least one condition that: a signal quality of a sidelink between the first node and a first relay device is less than or equal to a first preset threshold; a signal quality of a sidelink between the second node and the first relay device is less than or equal to the first preset threshold; a relay reselection timer of the first node, the first relay device or the second node times out, where the relay reselection timer is started upon completing establishment of an end-to-end sidelink connection between the first node and the second node; the first relay device is not capable of providing a sidelink service required by the first node; a sidelink load between the first relay device and the first node is greater than or equal to a second preset threshold; a sidelink load between the first relay device and the second node is greater than or equal to the second preset threshold; the first node receives a relay reselection indication message; the signal quality of the sidelink between the first node and the first relay device is lower by a specified value than signal qualities of sidelinks between the first node and other candidate relay devices; or the signal quality of the sidelink between the second node and the first relay device is lower by a specified value than signal qualities of sidelinks between the second node and other candidate relay devices.

In some embodiments, the relay reselection indication message mentioned above is originated from one or more of devices as follows: an upper node of the first node, the first relay device, and the second node.

In some embodiments, the reselection condition mentioned above further includes at least one condition that: a sidelink between the first node and the first relay device fails; and a sidelink failure between the second node and the first relay device fails.

In some embodiments, the at least one candidate relay device mentioned above is a relay device whose signal quality of a sidelink with the first node is greater than a third preset threshold and in the relay discovery device list for the first node.

In some embodiments, the selection module 803 mentioned above is configured to select a second relay device from the at least one candidate relay device. The second relay device is a relay device in the at least one candidate relay device and establishing a sidelink with the second node; or, the second relay device is a relay device in the at least one candidate relay device and having a highest signal quality of the sidelink with the second node.

In some embodiments, the reselection request message further includes: a relay reselection indication and an identifier of the second node; and the reselection response message further includes: the relay reselection indication and an identifier of the first node.

In some embodiments, in a case of a layer 2 relay, the identifier is a layer 2 ID; or, in a case of a layer 3 relay, the identifier is an IP address.

In some embodiments, the connection module 802 mentioned above is configured to receive a direct communication request message sent from the first node through the second relay device. The direct communication request message is used to request the second node to perform sidelink communication with the first node through the second relay device. The direct communication request message includes an identifier of the second relay device and an identifier of the second node.

In some embodiments, the connection module 802 mentioned above is configured to send a direct communication response message to the first node through the second relay device.

In some embodiments, the communication module 801 mentioned above is further configured to receive a sidelink connection request message sent from the first node in a case where a signal quality of a direct sidelink between the first node and the second node is greater than or equal to a fourth preset threshold. The sidelink connection request message is used to request the second node to communicate with the first node through the direct sidelink.

In a case of implementing the functions of the integrated modules mentioned above in the form of hardware, the embodiments of the present disclosure provide another structure of the reselection apparatus involved in the embodiments mentioned above, as shown in FIG. 16. The reselection apparatus 900 includes a processor 902 and a bus 904. In some embodiments, the reselection apparatus 900 may further include a memory 901. In some embodiments, the reselection apparatus may further include a communication interface 903.

The processor 902 may implement or execute various illustrative logical blocks, modules and circuits described in conjunction with the embodiments of the present disclosure. The processor 902 may be a central processing unit, a general-purpose processor, a digital signal processor, an application specific integrated circuit, a field programmable gate array or other programmable logic device, a transistor logic device, a hardware component, or any combination thereof. The processor 902 can implement or execute various illustrative logical blocks, modules and circuits described in conjunction with the embodiments of the present disclosure. The processor 902 may also be a combination capable of implementing computing functions, for example, a combination of one or more microprocessors, or a combination of a DSP (digital signal processor) and a microprocessor.

The communication interface 903 is configured to connect with other devices through a communication network. The communication network may be an Ethernet, a wireless access network, a wireless local area network (WLAN), etc.

The memory 901 may be a read-only memory (ROM) or a static storage device of any other type capable of storing static information and instructions, a random access memory (RAM) or a dynamic storage device of any other type capable of storing information and instructions, or an electrically erasable programmable read-only memory (EEPROM), a magnetic disk storage medium or other magnetic disk storage device, or any other medium capable of being used to carry or store desired program codes and capable of being accessed by a computer, where the desired program codes have instructions or are in the form of data structure.

As an implementation, the memory 901 may exist independently of the processor 902; and the memory 901 may be connected to the processor 902 through the bus 904, and is used for storing instructions or program codes. When calling and executing the instructions or program codes stored in the memory 901, the processor 902 is capable of realizing the sidelink relay reselection method provided in the embodiments of the present disclosure.

In another implementation, the memory 901 may also be integrated with the processor 902.

The bus 904 may be an extended industry standard architecture (EISA) bus, etc. The bus 904 may be classified into an address bus, a data bus, and a control bus, etc. For ease of representation, only one thick line is used in FIG. 16 for representation of the bus, but it does not mean that there is only one bus or one type of bus.

Some embodiments of the present disclosure provide a computer-readable storage medium (e.g., a non-transitory computer-readable storage medium). The computer-readable storage medium has computer program instructions stored therein, and when executed on a computer, the computer program instructions cause the computer to perform the sidelink relay reselection method described in any one embodiment of the embodiments mentioned above.

Exemplarily, the computer-readable storage medium mentioned above may include, but is not limited to, a magnetic storage device (e.g., a hard disk, a floppy disk or a magnetic tape), an optical disk (e.g., a compact disk (CD), or a digital versatile disk (DVD)), a smart card and a flash memory device (e.g., an erasable programmable read-only memory (EPROM), a card, a stick or a key driver). The various computer-readable storage mediums described in the present disclosure may represent one or more devices for storing information and/or other machine-readable storage medium for storing information. The term "machine-readable storage medium" may include, but is not limited to, wireless channels and various other mediums capable of storing, containing, and/or carrying instructions and/or data.

The embodiments of the present disclosure provide a computer program product containing instructions, and when executed on a computer, the computer program product causes the computer to perform the sidelink relay reselection method described in any one embodiment of the embodiments mentioned above.

The above are merely specific implementations of the present disclosure, but the protection scope of the present disclosure is not limited thereto. Any changes or replacements within the technical scope disclosed in the present disclosure shall be covered in the protection scope of the present disclosure. Therefore, the protection scope of the present disclosure shall be based on the protection scope of the claims.

## Claims

1. A sidelink relay reselection method, **characterized in that** the method is applied to a first node; the first node performs sidelink communication with a second node through a first relay device; and the method comprises:
obtaining an identifier of at least one candidate relay device through a relay discovery process;
sending a reselection request message to the second node in a case where a reselection condition is satisfied, wherein the reselection request message is used to request to reselect a relay device and the reselection request message comprises the identifier of the at least one candidate relay device;
receiving a reselection response message sent from the second node, wherein the reselection response message comprises an identifier of a second relay device and the second relay device is one of the at least one candidate relay device; and
establishing an end-to-end sidelink connection with the second node through the second relay device.

2. The method according to claim 1, wherein the reselection condition comprises at least one condition that:
a signal quality of a sidelink between the first node and the first relay device is less than or equal to a first preset threshold;
a signal quality of a sidelink between the second node and the first relay device is less than or equal to the first preset threshold;
a relay reselection timer of the first node, the first relay device or the second node times out, wherein the relay reselection timer is started upon completing establishment of an end-to-end sidelink connection between the first node and the second node;
the first relay device is not capable of providing a sidelink service required by the first node;
a sidelink load between the first relay device and the first node is greater than or equal to a second preset threshold;
a sidelink load between the first relay device and the second node is greater than or equal to the second preset threshold;
the first node receives a relay reselection indication message;
the signal quality of the sidelink between the first node and the first relay device is lower by a specified value than signal qualities of sidelinks between the first node and other candidate relay devices; or
the signal quality of the sidelink between the second node and the first relay device is lower by a specified value than signal qualities of sidelinks between the second node and other candidate relay devices.

3. The method according to claim 2, wherein the relay reselection indication message is originated from one or more of devices as follows: an upper node of the first node, the first relay device, and the second node.

4. The method according to claim 1, the reselection condition further comprises at least one condition that:
a sidelink between the first node and the first relay device fails; or
a sidelink between the second node and the first relay device fails.

5. The method according to claim 1, wherein the at least one candidate relay device is a relay device whose signal quality of a sidelink with the first node is greater than a third preset threshold and in a relay discovery device list for the first node.

6. The method according to claim 1, wherein the second relay device is a relay device in the at least one candidate relay device and establishing a sidelink with the second node; or, the second relay device is a relay device in the at least one candidate relay device and having a highest signal quality of a sidelink with the second node.

7. The method according to claim 1, wherein the reselection request message further comprises: a relay reselection indication and an identifier of the second node; and
the reselection response message further comprises: the relay reselection indication and an identifier of the first node.

8. The method according to claim 7, wherein the identifier is a layer 2 identity, ID, in a case of a layer 2 relay; or, the identifier is an internet protocol, IP, address in a case of a layer 3 relay.

9. The method according to claim 1, wherein the sending the reselection request message to the second node comprises:
sending the reselection request message to the second node through the first relay device.

10. The method according to claim 1, wherein the sending the reselection request message to the second node comprises:
sending the reselection request message to the second node through a third relay device; wherein the third relay device is a relay device that has established a communication connection with the second node; or, the third relay device is a relay device whose discovery device list comprises the second node.

11. The method according to claim 1, wherein the establishing the end-to-end sidelink connection with the second node through the second relay device comprises:
sending a direct communication request message to the second node through the second relay device, wherein the direct communication request message is used to request the second node to perform sidelink communication with the first node through the second relay device, and the direct communication request message comprises an identifier of the second relay device and an identifier of the second node.

12. The method according to claim 11, wherein the establishing the end-to-end sidelink connection with the second node through the second relay device further comprises:
receiving, through the second relay device, a direct communication response message sent from the second node.

13. The method according to claim 1, further comprising:
sending a sidelink connection request message to the second node in a case where a signal quality of a direct sidelink between the first node and the second node is greater than or equal to a fourth preset threshold, wherein the sidelink connection request message is used to request the second node to communicate with the first node through the direct sidelink.

14. A sidelink relay reselection method, **characterized in that** the method is applied to a second node; the second node performs sidelink communication with a first node through a first relay device; and the method comprises:
receiving a reselection request message sent from the first node in a case where a reselection condition is satisfied, wherein the reselection request message is used to request to reselect a relay device and the reselection request message comprises an identifier of at least one candidate relay device;
sending a reselection response message to the first node, wherein the reselection response message comprises an identifier of a second relay device and the second relay device is one of the at least one candidate relay device; and
establishing an end-to-end sidelink connection with the first node through the second relay device.

15. The method according to claim 14, wherein the reselection condition comprises at least one condition that:
a signal quality of a sidelink between the first node and the first relay device is less than or equal to a first preset threshold;
a signal quality of a sidelink between the second node and the first relay device is less than or equal to the first preset threshold;
a relay reselection timer of the first node, the first relay device or the second node times out, wherein the relay reselection timer is started upon completing establishment of an end-to-end sidelink connection between the first node and the second node;
the first relay device is not capable of providing a sidelink service required by the first node;
a sidelink load between the first relay device and the first node is greater than or equal to a second preset threshold; and
a sidelink load between the first relay device and the second node is greater than or equal to a second preset threshold;
the first node receives a relay reselection indication message;
the signal quality of the sidelink between the first node and the first relay device is lower by a specified value than signal qualities of sidelinks between the first node and other candidate relay devices; or
the signal quality of the sidelink between the second node and the first relay device is lower by a specified value than signal qualities of sidelinks between the second node and other candidate relay devices.

16. The method according to claim 15, wherein the relay reselection indication message is originated from one or more of devices as follows: an upper node of the first node, the first relay device, and the second node.

17. The method according to claim 14, the reselection condition further comprises at least one condition that:
a sidelink between the first node and the first relay device fails; and
a sidelink between the second node and the first relay device fails.

18. The method according to claim 14, wherein the at least one candidate relay device is a relay device whose signal quality of a sidelink with the first node is greater than a third preset threshold and in a relay discovery device list for the first node.

19. The method according to claim 14, further comprising:
selecting the second relay device from the at least one candidate relay device, wherein the second relay device is a relay device in the at least one candidate relay device and establishing a sidelink with the second node; or, the second relay device is a relay device in the at least one candidate relay device and having a highest signal quality of a sidelink with the second node.

20. The method according to claim 14, wherein the reselection request message further comprises: a relay reselection indication and an identifier of the second node; and
the reselection response message further comprises: the relay reselection indication and an identifier of the first node.

21. The method according to claim 14, wherein the identifier is a layer 2 ID in a case of a layer 2 relay; or, the identifier is an IP address in a case of a layer 3 relay.

22. The method according to claim 14, wherein the establishing the end-to-end sidelink connection with the first node through the second relay device comprises:
receiving, through the second relay device, a direct communication request message sent from the first node, wherein the direct communication request message is used to request the second node to perform sidelink communication with the first node through the second relay device, and the direct communication request message comprises an identifier of the second relay device and an identifier of the second node.

23. The method according to claim 22, wherein the establishing the end-to-end sidelink connection with the first node through the second relay device comprises:
sending a direct communication response message to the first node through the second relay device.

24. The method according to claim 14, further comprising:
receiving a sidelink connection request message sent from the first node in a case where a signal quality of a direct sidelink between the first node and the second node is greater than or equal to a fourth preset threshold, wherein the sidelink connection request message is used to request the second node to communicate with the first node through the direct sidelink.

25. A communication apparatus , **characterized by** comprising: a processor and a memory for storing instructions executable by the processor;
wherein the processor is configured to execute the instructions to enable the communication apparatus to perform the sidelink relay reselection method according to any one of claims 1 to 24.

26. A computer-readable storage medium, wherein the computer-readable storage medium has computer instructions stored thereon, and the computer instructions, upon being executed on an electronic device, enable the electronic device to perform the sidelink relay reselection method according to any one of claims 1 to 24.
